(19) **Europäisches Patentamt European Patent Office Office européen des brevets**

(11) **EP 2 092 180 B1**

(12) **FASCICULE DE BREVET EUROPEEN**

(45) Date de publication et mention
de la délivrance du brevet:
**02.03.2011 Bulletin 2011/09**

(51) Int Cl.:
***F02D 41/02*** *(2006.01)*        ***F02D 41/24*** *(2006.01)*
***F01N 9/00*** *(2006.01)*        ***F01N 3/035*** *(2006.01)*

(21) Numéro de dépôt: **07858689.8**

(22) Date de dépôt: **13.11.2007**

(86) Numéro de dépôt international:
**PCT/FR2007/052331**

(87) Numéro de publication internationale:
**WO 2008/059166 (22.05.2008 Gazette 2008/21)**

(54) **PROCEDE DE CALIBRAGE ET DE GESTION D'UNE LIGNE D'ECHAPPEMENT COMPRENANT UN FILTRE A PARTICULES**

VERFAHREN ZUR KALIBRIERUNG UND VERWALTUNG EINER ABGASLEITUNG MIT EINEM PARTIKELFILTER

METHOD FOR THE CALIBRATION AND MANAGEMENT OF AN EXHAUST LINE COMPRISING A PARTICLE FILTER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **17.11.2006  FR 0654961**

(43) Date de publication de la demande:
**26.08.2009  Bulletin 2009/35**

(73) Titulaire: **Saint-Gobain Centre de Recherches et d'Etudes Européen**
**92400 Courbevoie (FR)**

(72) Inventeurs:
• **GIROT, Patrick**
**13300 SALON DE PROVENCE (FR)**

• **CARRANZA, Francisco José**
**1210 BRUXELLES (BE)**

(74) Mandataire: **Lucas, Francois**
**Saint-Gobain Recherche**
**39, quai Lucien Lefranc**
**B.P. 135**
**F-93303 Aubervilliers Cedex (FR)**

(56) Documents cités:
**EP-A2- 0 587 146        EP-A2- 1 103 702**
**WO-A-2005/026507        FR-A- 2 865 768**
**FR-A1- 2 774 421        FR-A1- 2 829 798**
**US-A1- 2003 106 303**

**EP 2 092 180 B1**

**Description**

L'invention se rapporte au domaine des filtres à particules notamment utilisés dans une ligne d'échappement d'un moteur pour l'élimination des suies produites par la combustion d'un carburant par exemple diesel dans un moteur à combustion interne.

La présente invention concerne plus particulièrement un procédé de calibrage et de gestion d'une ligne d'échappement comprenant un tel filtre à particules, permettant d'en optimiser le fonctionnement.

Il est bien connu que la présence d'un filtre à particules dans une ligne d'échappement d'un moteur à combustion interne, en particulier d'un moteur diesel, permet de diminuer considérablement la quantité des particules, poussières et autres suies émises dans l'atmosphère et de satisfaire ainsi aux normes anti-pollution.

Les structures de filtration pour les suies contenues dans les gaz d'échappement de moteur à combustion interne sont bien connues de l'art antérieur. Ces structures présentent le plus souvent une structure en nid d'abeille, une des faces de la structure permettant l'admission des gaz d'échappement à filtrer et l'autre face l'évacuation des gaz d'échappement filtrés. La structure comporte, entre les faces d'admission et d'évacuation, un ensemble de conduits ou canaux adjacents d'axes parallèles entre eux séparés par des parois poreuses de filtration, lesquels conduits sont obturés à l'une ou l'autre de leurs extrémités pour délimiter des chambres d'entrée s'ouvrant suivant la face d'admission et des chambres de sortie s'ouvrant suivant la face d'évacuation. Pour une bonne étanchéité, la partie périphérique de la structure est le plus souvent entourée d'un ciment de revêtement. Les canaux sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant. Le plus souvent, les corps filtrants sont en matière céramique poreuse, par exemple à base de cordiérite ou de carbure de silicium.

Au cours du fonctionnement du moteur à combustion interne, le filtre à particules se charge progressivement d'hydrocarbures imbrûlés dont l'accumulation finit par dégrader les performances du filtre et celles du moteur. Cette accumulation se traduit en effet par une augmentation de la perte de charge, c'est-à-dire à la pression différentielle entre l'amont et l'aval du filtre dans la ligne d'échappement du moteur. Pour un bon fonctionnement du moteur, il s'avère donc nécessaire de « nettoyer » périodiquement in situ le filtre, opération qui est effectuée par la combustion des particules dans le filtre. De façon connue, durant sa mise en oeuvre, le filtre à particules est ainsi soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration et en diminuer la perte de charge.

Cependant, si les opérations de régénération sont mal maîtrisées, par exemple déclenchées trop tard, la structure poreuse peut alors être soumise à des contraintes thermomécaniques extrêmement intenses, qui peuvent entraîner des fissurations susceptibles sur la durée d'entraîner une perte sévère des capacités de filtration de l'unité, voire sa désactivation complète.

Plus largement, une bonne maîtrise de la régénération permettrait notamment d'éviter les problèmes suivants :

- une sous évaluation du niveau réel de chargement en suies du filtre à particules : le risque est alors la détérioration du filtre ou éventuellement du catalyseur lorsque le filtre incorpore une composante catalytique. La régénération étant trop tardive, la combustion des suies accumulées en trop grand nombre dans certaines parties du filtre conduit à un emballement de la combustion au niveau de points ou zones très chaudes et à l'apparition de fissures, voire à une destruction du filtre dans les cas extrêmes,

- une surévaluation du niveau réel de chargement en suie du filtre à particules : la conséquence est alors une fréquence de régénérations trop élevée et par conséquent une surconsommation élevée en carburant et surtout l'endommagement prématuré du moteur provoqué par une importante dilution d'huile liée à l'augmentation des durées de post injection.

Pour essayer de résoudre ces problèmes, différents procédés de gestion ont déjà été décrits :

Suivant un premier mode de gestion, de la manière la plus simple possible, l'opération de régénération peut être déclenchée au bout d'un certain intervalle de temps ou de distance parcourue, sans tenir compte de la charge en suie réelle du filtre amassée au cours du temps. En appliquant un tel principe, en cas d'un fonctionnement non conforme du moteur provoquant une augmentation anormale des émissions de particules, le risque d'endommagement du filtre devient important puisque les régénérations seront opérées avec une quantité de suie supérieure à la masse limite en suie.

Suivant un mode de gestion plus complexe, la régénération peut être déclenchée lorsque le filtre atteint une certaine charge en suies qui est déterminée en fonction de l'augmentation de la perte de charge occasionnée sur la ligne par le filtre.

Ainsi, plusieurs procédés et dispositifs ont été développés pour optimiser les opérations de régénération, qui utilisent une estimation du chargement réel du filtre. Cette estimation de la charge réelle en suie est le plus souvent déduite de la mesure de la pression différentielle régnant entre l'amont et l'aval du filtre.

Parmi ceux-ci, on peut citer la demande FR 2 774 421 qui propose un procédé de gestion de la régénération s'appuyant sur une valeur seuil maximale de la perte de charge pour le déclenchement de la phase de régénération. La demande FR 2 829 798 propose un système plus élaboré comprenant une étape de détermination de l'état de chargement en suie d'un filtre catalysé soit par une estimation via un modèle soit par une mesure de perte de charge, le choix entre mesure et estimation dépendant des conditions de roulage.

On connaît également de la demande EP 587 146, un procédé de régénération d'un filtre à particules incluant de des moyens de contrôle basés sur une mesure de la perte de charge. Selon ce document, la régénération du filtre est déclenchée si le chargement du filtre excède une valeur prédéterminée. Ce chargement est déduit de la pression différentielle régnant entre l'entrée et la sortie du filtre et d'une grandeur caractéristique du débit volumique des gaz traversant le filtre.

La publication US 2003/106303 décrit une méthode et un dispositif de contrôle et de calibrage d'un filtre à particules disposé dans une ligne d'échappement, permettant de déterminer le seuil de déclenchement d'une phase de régénération dudit filtre.

Tous les procédés décrits à ce jour ne tiennent cependant pas compte des variations possibles des propriétés de filtration qui existent d'un filtre à un autre, même si ceux-ci sont de même nature, c'est-à-dire obtenus sur la base des mêmes matériaux et par un procédé de fabrication analogue.

En particulier, dans toutes les configurations décrites à ce jour, il est constant que les procédés de gestion des phases de régénération font toujours référence à des valeurs seuils prédéterminées de la perte de charge au-delà de laquelle commence et éventuellement se termine la régénération. Ces valeurs seuils sont le plus souvent décrites comme extrapolées d'un modèle ou comme déterminées à l'avance et moyennées sur une population représentative de filtres.

On voit donc que la résolution du problème spécifique du contrôle des phases de régénération de filtres dans une ligne d'échappement évolue vers des systèmes complexes et coûteux de gestion, les procédés les plus avancés nécessitant par exemple la prise en compte de données de plus en plus nombreuses pour caractériser l'état de chargement du filtre (tels que perte de charge, régime moteur, température, débit de gaz traversant le moteur, etc...).

Parallèlement à cette complexification et toujours dans un but de contrôler plus efficacement les phases de régénération, les constructeurs automobiles imposent maintenant des cahiers des charges de plus en plus sévères en ce qui concerne les spécifications des filtres à particules. Ces spécifications concernent notamment les caractéristiques du filtre en terme de filtration et de perte de charge. En particulier la dispersion de la perte de charge, c'est-à-dire sa variation d'un filtre à un autre, doit être la plus faible possible autour d'une valeur cible.

Le premier objet de la présente invention est de remédier aux problèmes précédemment exposés de gestion des phases de recyclage en proposant un procédé de calibrage et de gestion propre à chaque filtre, permettant en outre d'optimiser, de sécuriser et de simplifier les opérations propres à la régénération, par rapport aux procédés décrits dans l'art antérieur. Une telle gestion améliorée permet au final d'augmenter la durée de vie du filtre dans la ligne d'échappement.

Un second objet de la présente invention est de fournir un procédé simple et économique permettant de qualifier des filtres sur la base de spécifications plus souples qu'à l'heure actuelle. En particulier, par application de la présente invention, il devient possible de qualifier une population de filtres dont les variations, d'un filtre à un autre, de la perte de charge engendrée sur une ligne d'échappement sont relativement importantes, sans pour autant augmenter les risques de détérioration du moteur ou d'endommagement du filtre en raison d'un déclenchement trop précoce ou trop tardif de la phase de régénération.

Plus précisément, la présente invention se rapporte à un procédé de calibrage et/ou de gestion d'une ligne d'échappement d'un véhicule à moteur comprenant un filtre à particules X, ledit procédé comprenant les étapes suivantes :

a) une étape initiale, sur une population représentative dudit filtre, de mesure de l'augmentation de la perte de charge $(\Delta P_{MSL})_Q$ en fonction du débit Q des gaz d'échappement traversant ledit filtre, $(\Delta P_{MSL})_Q$ étant associée à un chargement limite en particules de suies présentes dans un filtre, seuil de déclenchement d'une phase de régénération du filtre lors du fonctionnement du moteur,

b) une étape de mesure, en fonction du débit de gaz Q traversant le filtre et en l'absence de particules de suies, de la perte de charge $(\Delta P_{(x)sans\ suies})_Q$ spécifique dudit filtre X,

c) une étape de détermination, sur la base des valeurs obtenues par les étapes a) et b), d'une valeur limite de perte de charge $(\Delta P_{(x)lim})_Q$, seuil de déclenchement d'une phase de régénération, ladite valeur étant caractéristique dudit filtre et obtenue par exemple par la relation :

$$(\Delta P_{(x)lim})_Q \; = \; (\Delta P_{(x)sans\ suies})_Q \; + \; (\Delta P_{MSL})_Q.$$

La valeur seuil de perte de charge $(\Delta P_{(x)lim})_Q$ correspondant typiquement à une perte de charge engendrée par une charge en suies supportée par le filtre X et spécifique à celui-ci, au delà de laquelle un risque important de régénération sévère est présent, pouvant conduire potentiellement à une dégradation irréversible du filtre.

Au contraire de l'art antérieur, cette valeur limite de la perte de charge n'est pas prédéterminée (par exemple à partir de mesures effectuées sur une famille représentative de filtres) mais selon l'invention est spécifique du filtre X sur lequel le présent procédé a été mis en oeuvre.

Selon l'invention, $(\Delta P_{MSL})_Q$ correspond à la contribution spécifique à la perte de charge de la somme des particules de suies présentes dans les pores et sur les parois internes du filtre, au seuil de déclenchement d'une phase de régénération. Cette valeur est par exemple déterminée précocement lors d'une campagne de mesures effectuée sur une population représentative de filtres.

Par exemple, on peut mesurer sur une série d'au moins 10 filtres propres, c'est-à-dire sans suies ni résidus, en fonction du débit de gaz traversant les filtres, une valeur moyenne de la perte de charge occasionnée dans une ligne d'échappement par la structure poreuse, en l'absence de toute particule. De préférence, les mesures de pertes de charge sont réalisées sur un banc configuré pour correspondre sensiblement aux données techniques de la ligne d'échappement du véhicule incorporant ledit filtre.

On peut également déterminer, sur cette même série de filtres, en fonction du débit de gaz, une valeur moyenne de la perte de charge occasionnée par un filtre chargé à sa masse limite en suies, c'est-à-dire de telle manière qu'une phase de régénération provoque sa dégradation irréversible. On obtient ainsi, en fonction du débit Q, un terme $(\Delta P_{MSL})_Q$, moyenné sur l'échantillon représentatif des filtres, par différence entre les valeurs obtenues précédemment de la perte de charge des filtres chargés à leur masse limite en suies et de la perte de charge occasionnée par ces mêmes filtres lorsque ceux-ci sont propres.

De façon surprenante, les études effectuées par la demanderesse ont montré que les variations du terme $(\Delta P_{MSL})_Q$ ainsi déterminé étaient relativement faibles d'un filtre à un autre au sein d'une population de filtre, pourvu que leurs conditions de fabrication soient sensiblement identiques.

Par exemple, le mode opératoire de détermination de la masse limite en suies peut être le suivant :

Une population de filtres neufs d'au moins dix filtres est soumise successivement aux étapes suivantes :

Dans un premier temps, chaque filtre est monté avec son caning sur un banc moteur équipé d'un dispositif de mesure de la perte de charge, de manière à reproduire une ligne d'échappement, idéalement correspondant à celle équipant le véhicule qui disposera du format de filtre ainsi caractérisé.

Dans un deuxième temps, le moteur, par exemple du type DW10A de PSA 2L injection Diesel, est mis en marche à pleine puissance à 4000 tours/minute pendant 30 minutes afin de stabiliser thermiquement les filtres montés comme décrit préalablement, c'est-à-dire avec leur gainage. Les filtres sont ensuite démontés et pesés avec leur gainage pour déterminer une masse initiale. Les filtres sont alors remontés sur le banc moteur puis soumis pendant des durées différentes à un fonctionnement du moteur à 3000 tours/minute pour un couple de 50 Nm afin d'être chargés à différentes masses de suie. Les filtres numérotés sont ensuite pesés et la masse de suie déterminée pour chaque filtre par la différence entre la masse obtenue et la masse initiale.

Les filtres ainsi chargés sont remontés sur la ligne pour subir une régénération sévère définie comme suit: après une stabilisation à un régime moteur de 1700 tours/minute pour un couple de 95Nm pendant 2 minutes, une post-injection est réalisée avec 70° de phasage pour un débit de post injection de 18mm$^3$/coup. Une fois la combustion des suies initiée, plus précisément lorsque la perte de charge diminue pendant au moins 4 secondes, le régime du moteur est abaissé à 1050 tours/minute pour un couple de 40Nm pendant 5 minutes afin d'accélérer la combustion des suies. Le filtre est ensuite soumis à un régime moteur de 4000 tours/minute pendant 30 minutes afin d'éliminer les suies restantes.

Les filtres ainsi régénérés sont inspectés après découpe pour révéler la présence éventuelle de fissures visibles à l'oeil nu. Sur la totalité des filtres, on peut ainsi déterminer une masse limite en suie, seuil d'apparition de fissures.

En général, les valeurs des chargements limites en particules de suie sont fonctions de la résistance thermomécanique intrinsèque des filtres et elles dépendent donc principalement des caractéristiques intrinsèques du filtre, en particulier de la nature du matériau constituant ses parois filtrantes et de sa microstructure (volume de porosité ouverte, distribution de taille de pores, conductivité thermique, coefficient d'expansion thermique, module de rupture et d'élasticité, etc..) sans que l'on puisse aujourd'hui précisément modéliser cette relation de dépendance.

Selon l'invention, les étapes b) et c) sont effectuées sur le filtre (X) lorsque celui-ci est installé dans la ligne d'échappement du véhicule.

Selon l'invention, $(\Delta P_{(x)\text{sans suies}})_Q$ est déterminée à partir de différents points de fonctionnement du moteur, en particulier à partir de la mesure du débit des gaz d'échappement pour chacun des points de fonctionnement.

La valeur $(\Delta P_{(x)\text{ sans suies}})_Q$ est déterminée selon l'invention par application d'un modèle d'extrapolation de la perte de charge, par exemple du type quadratique : $(\Delta P_{(x)\text{ sans suies}})_Q = aQ^2 + bQ + c$ où a, b et c sont des coefficients déterminables typiquement par une méthode du type moindre carré.

Selon un mode possible les étapes b) et c) sont effectuées à intervalles réguliers sur un filtre usagé mais exempt de suies, par exemple après une phase prolongée de régénération du filtre.

Dans ce mode, on intègre alors de préférence à la valeur $(\Delta P_{MSL})_Q$ une composante additionnelle, pour tenir compte de l'augmentation de la perte de charge occasionnée par des résidus imbrûlables au cours des cycles de régénération successifs.

Ladite composante additionnelle peut par exemple être estimée à partir du kilométrage du véhicule et/ou de données techniques préenregistrées.

Selon l'invention, le filtre peut comprendre en outre une composante catalytique et le filtre peut être à base de carbure de silicium SiC.

L'invention se rapporte également à un système de gestion d'une ligne d'échappement intégrant des moyens de mise en oeuvre d'un procédé selon l'une des revendications précédentes.

Les buts, aspects et avantages de la présente invention, seront mieux compris à la lecture de la description présentée ci-après d'un mode de réalisation de l'invention, donné à titre d'exemple non limitatif, et en se référant à la figure annexée. La figure illustre une vue schématique d'un moteur à combustion interne dont la ligne d'échappement est équipée d'un filtre à particules et de moyens mettant en oeuvre le procédé selon l'invention.

Seuls les éléments nécessaires à la compréhension de l'invention ont été représentés sur la figure jointe. La structure générale d'un moteur à combustion interne référencé 1 est représentée, par exemple un moteur diesel pour véhicule automobile à quatre cylindres et injection directe de carburant. Le moteur 1 est équipé d'un système ou ligne d'échappement 5 incluant des moyens de la filtration 6 des particules émises.

De façon classique, le moteur 1 est alimenté en air à travers un circuit d'admission 2. Un ou plusieurs capteurs 9 équipent ce circuit d'admission pour fournir à un calculateur de contrôle moteur 3 des informations concernant la pression, la température ou encore le débit de l'air d'admission.

L'alimentation en carburant est assurée par exemple par des injecteurs électromagnétiques 10 débouchant dans les chambres de combustion du moteur et pilotés par le calculateur 3 à partir d'un circuit de carburant sous pression 4 de type rampe commune.

En sortie du moteur 1, les gaz d'échappement, évacués par la ligne 5 traversent un filtre à particules 6. Différents capteurs, en particulier des capteurs de pression 7 et de température 8 sont placés en amont et en aval du filtre 5 et fournissent au calculateur de contrôle moteur 3 des informations sur les paramètres correspondants.

De façon connue, en dehors des phases de régénération, le calculateur d'injection 3 commande donc à partir des informations délivrées par les différents capteurs et en particulier de la masse d'air admise et du régime moteur, ainsi qu'à partir de formules et de calibrations mémorisées permettant le réglage optimal du moteur, le fonctionnement des injecteurs et notamment l'instant de début d'injection et la durée d'ouverture des injecteurs, c'est-à-dire la quantité de carburant injectée et donc la richesse du mélange remplissant les chambres de combustion.

Le calculateur d'injection 3 se compose de manière connue d'un microprocesseur ou d'une unité centrale du type CPU, de mémoires vives RAM, de mémoires mortes ROM, de convertisseurs analogiques-numériques A/D et des interfaces d'entrée et de sortie nécessaires.

De façon connue, le microprocesseur du calculateur d'injection 3 comporte des circuits électroniques et des logiciels appropriés pour traiter les signaux en provenance de différents capteurs reliés, en déduire les états du moteur et générer les signaux de commande appropriés à destination notamment des différents actuateurs pilotés tel que décrits précédemment. Il peut également commander éventuellement des moyens d'aide à la régénération, par exemple un brûleur, un système de contrôle du type vanne EGR ou un système de pilotage de turbocompresseur.

Selon l'invention, le calculateur 3 est également adapté pour assurer le bon fonctionnement du système d'échappement et notamment du filtre à particules 6. En particulier, le calculateur 3 déduit, à partir des informations fournies notamment par les capteurs 7 et 8, le seuil de déclenchement et éventuellement d'arrêt des phases de régénération selon des stratégies adaptées et évolutives, comme il sera décrit par la suite. Cette phase de régénération consiste essentiellement à augmenter la température des gaz d'échappement traversant le filtre 6 de façon à enflammer les particules piégées.

Différents moyens pour élever la température des gaz d'échappement peuvent être employés. Cette élévation de la température des gaz d'échappement est par exemple réalisée par une simple commande des injecteurs en injectant en phase détente une quantité additionnelle de carburant et ce, pendant un nombre donné de cycles du moteur.

Le calculateur 3 est en particulier adapté pour mettre en oeuvre le procédé de calibration et de gestion selon l'invention, tel que décrit précédemment.

Plus précisément, selon l'invention, une cartographie de l'augmentation moyenne de la perte de charge $(\Delta P_{MSL})_Q$ associée aux particules de suie est implantée dans le calculateur 3.

Cette cartographie comprend la loi de variation de la valeur moyenne $(\Delta P_{MSL})_Q$ en fonction du débit Q des gaz d'échappement traversant ledit filtre. Tel que déjà décrit, on rappelle que $(\Delta P_{MSL})_Q$ est la perte de charge moyenne engendrée par la masse des particules de suie présentes dans un filtre, au seuil de déclenchement d'une phase de régénération. Bien évidemment, cette cartographie du paramètre moyen $(\Delta P_{MSL})_Q$ tient compte également de toute correction nécessaire, notamment liée à l'influence et aux effets des variations possibles de la température des gaz dans la ligne d'échappement. Cette cartographie a été déterminée au préalable par toute technique connue, par exemple à partir d'une campagne de tests pratiquée sur une population de filtres de même nature, c'est-à-dire sensiblement obtenus à partir des mêmes matériaux initiaux et en utilisant un procédé de fabrication sensiblement identique. De préférence ladite cartographie est obtenue tel qu'il a été précédemment décrit.

Selon l'invention, dès les premiers tours de roue du véhicule, une mesure de la perte de charge occasionnée par le filtre embarqué est réalisée à différents régimes du moteur.

Par exemple, à titre purement illustratif, l'opérateur en charge de conduire le véhicule neuf sur le parking de stockage, stabilise le moteur à 1000 tr/min sans enclencher de vitesse pendant le temps nécessaire au calculateur pour obtenir une première valeur de la perte de charge spécifique au filtre embarqué dans la ligne, correspondant à un premier débit de gaz, qui est par exemple mesuré par un capteur 9. Le même protocole est appliqué pour des valeurs de la vitesse de rotation du moteur différentes, par exemple comprise entre 2000 et 3000 tr/min.

Le calculateur va ainsi récupérer une pluralité de mesures de la perte de charges, chacune correspondant à un débit de gaz.

Par l'application d'un modèle d'extrapolation de la perte de charge le calculateur obtient une cartographie de la perte de charge $(\Delta P_{(x\ sans\ suies)})_Q$ spécifique du filtre embarqué sur la ligne d'échappement.

Par exemple, le modèle d'extrapolation est du type quadratique $(\Delta P_{(x\ sans\ suie)})_Q = aQ^2 + bQ + c$, et la détermination des coefficients a, b et c est obtenue par une méthode de type moindre carré.

Le calculateur calcule alors de manière instantanée, sur la base des cartographies ainsi disponibles, une nouvelle cartographie de la valeur limite de la perte de charge $(\Delta P_{(x\ lim)})_Q$, seuil de déclenchement d'une phase de régénération, par l'application de la relation simple $(\Delta P_{(x\ lim)})_Q = (\Delta P_{(x\ sans\ suies)})_Q + (\Delta P_{MSL})_Q$. Selon l'invention, la valeur ainsi calculée est caractéristique et spécifique du filtre x et donc beaucoup plus précise que les valeurs de déclenchement prédéterminées de l'art antérieur. Sur la base de cette nouvelle cartographie, le calculateur 3 déclenche ensuite de manière classique les phases de régénération successives à partir des mesures obtenues grâce aux différents capteurs 7, 8 et 9 lorsque cela est nécessaire. Les procédures de déclenchement décrites dans les demandes FR 2 774 421, FR 2829 798 ou encore EP 587 146 peuvent par exemple être utilisées.

Cette détermination « in situ », spécifique à chaque filtre, permet très avantageusement de qualifier des filtres sur la base de spécifications plus souples qu'à l'heure actuelle. En particulier, il devient possible d'utiliser sans conséquence une population de filtres dont les variations, d'un filtre à un autre, de la perte de charge engendrée sur une ligne d'échappement, avec ou sans suies, sont relativement importantes, sans augmenter les risques de détérioration du moteur ou d'endommagement du filtre en raison d'un déclenchement trop précoce ou trop tardif de la phase de régénération.

En outre, le procédé tel qu'il vient d'être décrit a aussi l'avantage de s'affranchir des variations liées aux éventuelles imprécisions dans les mesures effectuées en laboratoire en raison par exemple de l'utilisation d'un type différent de capteurs, puisque les différentes mesures (pression, température) sont déterminées avec les capteurs du véhicule intégrant le filtre à calibrer.

Sans sortir du cadre de l'invention, le présent procédé de calibration et de gestion peut avantageusement également être utilisé de façon dynamique, évolutive et prolongée sur toute la durée de vie du filtre et/ou du véhicule. Par exemple, le protocole précédemment exposé peut être réitéré par le calculateur lors d'un changement de filtre. Il peut être également mis en oeuvre à intervalles périodiques, par exemple tous les 10 000 kilomètres, sur un filtre en service mais débarrassé de ses suies, c'est-à-dire typiquement après une régénération ayant une durée prolongée, par exemple double, par rapport à la durée nominale d'une régénération simple, ceci afin d'être certain que l'ensemble des suies ont été brûlées.

Une telle utilisation incorpore alors de préférence cependant la réévaluation du terme $(\Delta P_{MSL})_Q$. Une perte de charge additionnelle est de préférence intégrée à $(\Delta P_{MSL})_Q$, qui traduit l'augmentation de la perte de charge occasionnée par la présence des résidus imbrûlables accumulés sur le filtre au cours des cycles successifs. Cette composante additionnelle peut par exemple être préalablement mesurée sur une population représentative dudit filtre en fonction de la masse de résidus de façon similaire à la méthode de mesure de la composante $(\Delta P_{MSL})_Q$, par exemple telle que précédemment exposée. La masse de résidus peut notamment aussi être estimée par exemple selon le modèle du véhicule et en fonction du kilométrage.

D'autres réalisations sont bien évidemment possibles sans sortir du cadre des revendications. En particulier :

- le procédé peut être appliqué sur un filtre catalysé

**Revendications**

1. Procédé de calibrage et de gestion d'une ligne d'échappement d'un véhicule à moteur comprenant un filtre à particules (x), ledit procédé comprenant les étapes suivantes :

a) une étape initiale, sur une population représentative dudit filtre, de mesure de l'augmentation de la perte de charge $(\Delta P_{MSL})_Q$ en fonction du débit Q des gaz d'échappement traversant ledit filtre, $(\Delta P_{MSL})_Q$ étant associée à un chargement limite en particules de suies présentes dans un filtre, seuil de déclenchement d'une phase de régénération du filtre, lors du fonctionnement du moteur,
b) une étape de mesure, en fonction du débit de gaz Q traversant le filtre et en l'absence de particules de suies, de la perte de charge $(\Delta P_{(x)\text{ sans suies}})_Q$ spécifique dudit filtre (X),
c) une étape de détermination, sur la base des valeurs obtenues par les étapes a) et b), d'une valeur limite de perte de charge $(\Delta P_{(x)\text{ lim}})_Q$, seuil de déclenchement d'une phase de régénération, ladite valeur étant caractéristique dudit filtre et obtenue par la relation :

$$(\Delta P_{(x)\text{lim}})_Q = (\Delta P_{(x)\text{ sans suies}})_Q + (\Delta P_{MSL})_Q,$$

- lesdites étapes b) et c) étant effectuées sur le filtre (X) lorsque celui-ci est installé dans la ligne d'échappement du véhicule,
- $(\Delta P_{(x)\text{sans suies}})_Q$ étant déterminée à partir de la mesure du débit des gaz d'échappement pour différents points de fonctionnement du moteur et par application d'un modèle d'extrapolation de la perte de charge.

2. Procédé selon la revendication 1, dans lequel $(\Delta P_{(x)\text{ sans suies}})_Q$ est déterminée par application d'un modèle d'extrapolation de la perte de charge du type quadratique: $(\Delta P_{(x)\text{sans suies}})_Q = aQ^2 + bQ + c$ où a, b et c sont des coefficients déterminables typiquement par une méthode du type moindre carré.

3. Procédé selon l'une des revendications 1 ou 2, dans lequel les étapes b) et c) sont effectuées sur un filtre neuf, par exemple à la sortie d'usine de fabrication du véhicule.

4. Procédé selon l'une des revendications 1 ou 2, dans lequel les étapes b) et c) sont effectuées à intervalles réguliers sur un filtre usagé mais exempt de suie, par exemple après une phase prolongée de régénération du filtre.

5. Procédé selon la revendication 4, dans lequel on intègre à la valeur $(\Delta P_{MSL})_Q$ une composante additionnelle, pour tenir compte de l'augmentation de la perte de charge occasionnée par des résidus imbrûlables au cours des cycles de régénération successifs.

6. Procédé selon la revendication 5, dans lequel ladite composante additionnelle est estimée à partir du kilométrage du véhicule et/ou de données techniques préenregistrées.

7. Procédé selon l'une des revendications précédentes, dans lequel le filtre comprend en outre une composante catalytique.

8. Procédé selon l'une des revendications précédentes, dans lequel le filtre à base de carbure de silicium SiC.

9. Système de gestion d'une ligne d'échappement intégrant des capteurs de pression (7) et de température (8) placés en amont et en aval du filtre (5) reliés au calculateur de contrôle moteur (3), ledit calculateur étant adapté à la mise en oeuvre d'un procédé selon l'une des revendications précédentes et incorporant une cartographie de l'augmentation moyenne de la perte de charge $(\Delta P_{MSL})_Q$ associée à un chargement limite en particules de suies, au seuil de déclenchement d'une phase de régénération.

**Claims**

1. A method for the calibration and control of an exhaust line of a motor vehicle that includes a particulate filter (X), said method comprising the following steps:

   a) an initial step, on a population representative of said filter, of measuring the increase in pressure drop $(\Delta P_{MSL})_Q$ as a function of the flow rate Q of the exhaust gases passing through said filter, $(\Delta P_{MSL})_Q$ being associated with a limit loading of soot particles present in a filter, i.e. a threshold for triggering a filter regeneration phase during operation of the engine;

   b) a step of measuring the specific pressure drop $(\Delta P_{(x), \text{soot-free}})_Q$ of said filter (X) as a function of the flow rate Q of gases passing through the filter in the absence of soot particles; and

   c) a step of determining a pressure drop limit value $(\Delta P_{(x), \text{lim}})_Q$, i.e. a threshold for triggering a regeneration phase, on the basis of the values obtained from steps a) and b), said limit value being characteristic of said filter and obtained by the equation:

$$(\Delta P_{(x), \text{lim}})_Q \ = \ (\Delta P_{(x), \text{soot-free}})_Q \ + \ (\Delta P_{MSL})_Q,$$

   - said steps b) and c) being carried out on the filter (X) when the latter is fitted in the exhaust line of the vehicle,
   - $(\Delta P_{(x), \text{soot-free}})$ being determined from the measure of the exhaust gas flow rate for various operating points of the engine and by applying a pressure drop extrapolation model.

2. The method as claimed in claim 1, in which the value $(\Delta P_{(x), \text{soot-free}})_Q$ is determined by applying a pressure drop extrapolation model of the quadratic type: $(\Delta P_{(x), \text{soot-free}})_Q = aQ^2 + bQ + c$, where a, b and c are coefficients that can be typically determined by a least-squares method.

3. The method as claimed in one of claims 1 or 2, in which steps b) and c) are carried out on a fresh filter, for example on leaving the vehicle manufacturing plant.

4. The method as claimed in one of claims 1 or 2, in which steps b) and c) are carried out at regular intervals on a used but soot-free filter, for example after a prolonged filter regeneration phase.

5. The method as claimed in claim 4, in which an additional component is incorporated into the $(\Delta P_{MSL})_Q$ value so as to take into account the increase in pressure drop brought about by residues that cannot be burnt off during the successive regeneration cycles.

6. The method as claimed in claim 5, in which said additional component is estimated from the mileage of the vehicle and/or from prerecorded technical data.

7. The method as claimed in one of the preceding claims, in which the filter further includes a catalytic component.

8. The method as claimed in one of the preceding claims, in which the filter is based on silicon carbide SiC.

9. A system for the control of an exhaust line incorporating pressure sensors (7) and temperature sensors (8) that are placed upstream and downstream of the filter (5) and are connected to the engine control computer (3), said computer being designed to implement a method as claimed in one of the preceding claims and incorporating a map of the average increase in pressure drop $(\Delta P_{MSL})_Q$ associated with a limit soot particle loading at the threshold for triggering a regeneration phase.

**Patentansprüche**

1. Verfahren zum Kalibrieren und Steuern einer ein Partikelfilter (X) umfassenden Abgasleitung eines Kraftfahrzeugs, wobei das Verfahren die folgenden Schritte umfasst:

   a) einen Anfangsschritt, an einer für das Filter repräsentativen Grundgesamtheit, zur Messung der Zunahme des Druckverlustes $(\Delta P_{MSL})_Q$ in Abhängigkeit von der Menge Q der das Filter durchströmenden Abgase, wobei

($\Delta P_{MSL})_Q$ einer Grenzbelastung mit in einem Filter vorhandenen Rußpartikeln, der Schwelle zur Auslösung einer Regenerationsphase des Filters während des Betriebs des Motors zugeordnet ist,

b) einen Schritt zur Messung des spezifischen Druckverlustes $(\Delta P_{(x\ ohne\ Ruß)})_Q$ des Filters (X) in Abhängigkeit von der das Filter durchströmenden Gasmenge Q und in Abwesenheit von Rußpartikeln,

c) einen Schritt zur Bestimmung eines Druckverlustgrenzwertes $(\Delta P_{(x)lim})_Q$, Schwelle zur Auslösung einer Regenerationsphase, auf der Basis der durch die Schritte a) und b) erhaltenen Werte, wobei der Wert für das Filter kennzeichnend ist und durch die Beziehung erhalten wird:

$$(\Delta P_{(x)lim})_Q = (\Delta P_{(x\ ohne\ Ruß)})_Q + (\Delta P_{MSL})_Q,$$

- wobei die Schritte b) und c) an dem Filter (X) dann durchgeführt werden, wenn dieser in der Abgasleitung des Fahrzeugs installiert ist,

- wobei $(\Delta P_{(x\ ohne\ Ruß)})_Q$ anhand der Messung der Menge der Abgase für unterschiedliche Betriebspunkte des Motors und durch Anwendung eines Modells zur Extrapolation des Druckverlustes bestimmt wird.

2. Verfahren nach Anspruch 1, wobei $(\Delta P_{(x\ ohne\ Ruß)})_Q$ durch Anwendung eines Modells zur Extrapolation des Druckverlustes quadratischer Art, nämlich $(\Delta P_{(x)\ ohne\ Ruß})_Q = aQ^2 + bQ + c$ bestimmt wird, worin a, b und c Koeffizienten sind, die typischerweise durch eine Methode vom Typ Methode der kleinsten Fehlerquadrate bestimmbar sind.

3. Verfahren nach einem der Ansprüche 1 oder 2, wobei die Schritte b) und c) an einem fabrikneuen Filter, beispielsweise bei Verlassen der Herstellerfabrik des Fahrzeugs durchgeführt werden.

4. Verfahren nach einem der Ansprüche 1 oder 2, wobei die Schritte b) und c) in regelmäßigen Abständen an einem gebrauchten, jedoch rußfreien Filter, beispielsweise nach einer längeren Regenrationsphase des Filters durchgeführt werden.

5. Verfahren nach Anspruch 4, wobei in den Wert $(\Delta P_{MSL})_Q$ eine zusätzliche Komponente integriert wird, um der Zunahme des Druckverlustes, die durch im Laufe der aufeinander folgenden Regenerationszyklen nicht verbrennbare Rückstände verursacht wird, Rechnung zu tragen.

6. Verfahren nach Anspruch 5, wobei die zusätzliche Komponente anhand des Kilometerstands des Fahrzeugs und/oder von vorgespeicherten technischen Daten geschätzt wird.

7. Verfahren nach einem der vorstehenden Ansprüche, wobei das Filter ferner eine katalytische Komponente umfasst.

8. Verfahren nach einem der vorstehenden Ansprüche, wobei das Filter auf der Basis von Siliziumkarbid SiC ist.

9. System zur Steuerung einer Abgasleitung, mit dem Filter (6) vor- und nachgeschalteten Druckfühlern (7) und Temperaturfühlern (8), die mit dem Motorkontrollrechner (3) verbunden sind, wobei der Rechner für die Durchführung eines Verfahrens nach einem der vorstehenden Ansprüche geeignet ist und eine Karte der durchschnittlichen Zunahme des Druckverlustes $(\Delta P_{MSL})_Q$, der einer Grenzbelastung mit Rußpartikeln, der Schwelle zur Auslösung einer Regenerationsphase zugeordnet ist, enthält.

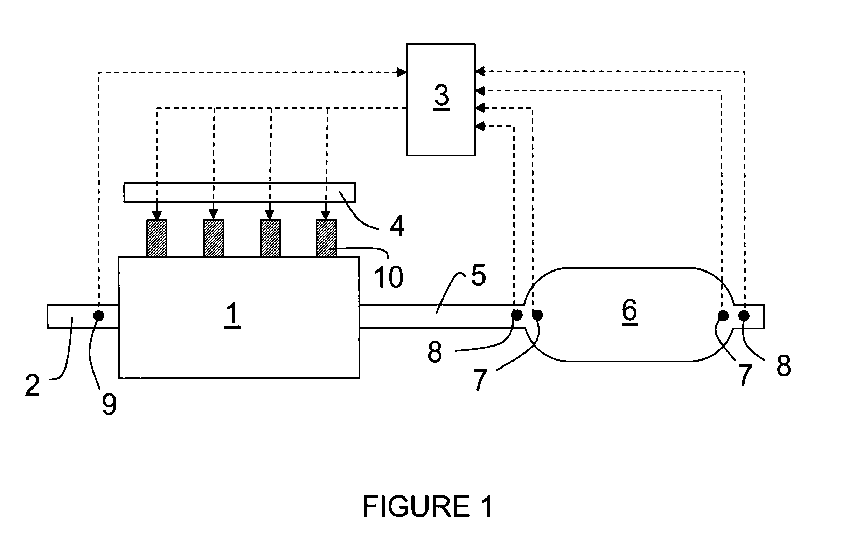

FIGURE 1

**EP 2 092 180 B1**

**RÉFÉRENCES CITÉES DANS LA DESCRIPTION**

**Documents brevets cités dans la description**

- FR 2774421
- FR 2829798
- EP 587146 A
- US 2003106303 A